(19) Europäisches Patentamt
European Patent Office
Office européen des brevets

(11) EP 3 808 569 B1

(12) EUROPEAN PATENT SPECIFICATION

(45) Date of publication and mention of the grant of the patent:
**15.11.2023 Bulletin 2023/46**

(21) Application number: **20195430.2**

(22) Date of filing: **10.09.2020**

(51) International Patent Classification (IPC):
***B60C 1/00*** (2006.01) ***C08L 9/06*** (2006.01)
***C08K 3/36*** (2006.01) ***C08L 45/00*** (2006.01)
***C08L 9/00*** (2006.01) ***C08L 21/00*** (2006.01)

(52) Cooperative Patent Classification (CPC):
(C-Sets available)
**B60C 1/0016; C08L 9/06** (Cont.)

(54) **TIRE COMPOSITION AND TIRE**

REIFENZUSAMMENSETZUNG UND REIFEN

COMPOSITION DE PNEUMATIQUE ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 JP 2019188538**
**15.10.2019 JP 2019188537**
**02.12.2019 JP 2019218227**

(43) Date of publication of application:
**21.04.2021 Bulletin 2021/16**

(73) Proprietor: **Sumitomo Rubber Industries, Ltd.**
**Kobe-shi, Hyogo 651-0072 (JP)**

(72) Inventor: **WATANABE, Kenya**
**Kobe-shi,, Hyogo 651-0072 (JP)**

(74) Representative: **TBK**
**Bavariaring 4-6**
**80336 München (DE)**

(56) References cited:
**EP-A1- 3 231 840**
**EP-A1- 3 434 722**
**EP-A1- 3 608 126**
**WO-A1-2018/159621**
**JP-A- 2017 095 673**
**JP-A- 2018 100 321**

EP 3 808 569 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08L 9/00, C08L 45/00, C08L 91/00, C08L 83/08, C08L 91/06, C08K 3/04, C08K 3/36, C08K 5/09, C08K 3/22, C08K 3/06, C08K 5/31, C08K 5/47, C08K 5/18;**
**C08L 9/06, C08L 9/00, C08L 45/00, C08L 91/00, C08L 91/06, C08K 3/04, C08K 3/36, C08K 5/09, C08K 3/22, C08K 3/06, C08K 5/31, C08K 5/47, C08K 5/18, C08K 5/548;**
**C08L 9/06, C08L 45/00, C08L 9/00, C08L 53/02, C08L 91/00, C08L 83/08, C08L 91/06, C08K 3/04, C08K 3/36, C08K 5/09, C08K 3/22, C08K 3/06, C08K 5/31, C08K 5/47, C08K 5/18**

**Description**

TECHNICAL FIELD

The present invention relates to tire compositions and tires.

BACKGROUND ART

Tires have conventionally required various properties. For safety reasons, wet grip performance has been emphasized (see, for example, Patent Literature 1). For example, an attempt has been made to improve wet grip performance by incorporating a dicyclopentadiene resin.

CITATION LIST

PATENT LITERATURE

Patent Literature 1: JP 2008-101127 A

Further tire compositions are disclosed in EP 3608126 A1 (published on February 12, 2020), JP 2018-100321 A, EP 3434722 A1, JP 2017-095673 A, EP 3231840 A1 and WO 2018/159621 A1.

SUMMARY OF INVENTION

TECHNICAL PROBLEM

As a result of extensive experimentation, the present inventor has found that compositions containing resins, in particular dicyclopentadiene resins, have a reduced modulus of elasticity, thus resulting in a deterioration in response during high-speed running. Thus, it has been discovered by the inventor that the conventional techniques leave room for improvement in terms of response during high-speed running.

The present invention aims to solve the new problem discovered by the present inventor and provide tire compositions which provide improved response during high-speed running, and tires including the tire compositions.

SOLUTION TO PROBLEM

The present invention relates to a tire composition, containing: an elastomer component; a silica having a nitrogen adsorption specific surface area of 170 $m^2/g$ or more; and a dicyclopentadiene-aromatic compound copolymer resin.

The tire composition may further comprise a hydrogenated dicyclopentadiene resin.

In the tire composition, a product of (Amount of silica)×(Nitrogen adsorption specific surface area of silica) is preferably 8500 or more.

In the tire composition, a ratio of (Combined amount of dicyclopentadiene-aromatic compound copolymer resin and hydrogenated dicyclopentadiene resin)/(Amount of silica) is preferably 0.125 or more.

The tire composition preferably contains a mercapto silane coupling agent.

The silica having a nitrogen adsorption specific surface area of 170 $m^2/g$ or more preferably has a nitrogen adsorption specific surface area of 200 $m^2/g$ or more, more preferably 210 $m^2/g$ or more, still more preferably 220 $m^2/g$ or more.

The tire composition is preferably for use in treads.

The tire composition is preferably for use in tires for passenger vehicles.

The present invention also relates to a tire, including a tire component containing the composition.

The tire component is preferably a tread.

ADVANTAGEOUS EFFECTS OF INVENTION

The tire compositions according to the present invention contain an elastomer component, a silica having a nitrogen adsorption specific surface area of 170 $m^2/g$ or more, and a dicyclopentadiene-aromatic compound copolymer resin. Such tire compositions provide improved response during high-speed running.

DESCRIPTION OF EMBODIMENTS

The tire compositions of the present invention contain an elastomer component, a silica having a nitrogen adsorption specific surface area of 170 $m^2/g$ or more, and a dicyclopentadiene-aromatic compound copolymer resin. Thus, the tire compositions provide improved response (vehicle handling performance) during high-speed running.

The tire compositions have the above-mentioned advantageous effect. The reason for the advantageous effect is not exactly clear but may be explained as follows.

The incorporation of a dicyclopentadiene-aromatic compound copolymer resin and optionally a hydrogenated dicyclopentadiene resin tends to allow the composition to have an increased viscosity, which will cause the silica to undergo higher shear stress during kneading. Thus, the dispersibility of fine particle silica (a silica having a nitrogen adsorption specific surface area of 170 $m^2/g$ or more), which is originally difficult to disperse, can be enhanced, and the response during high-speed running can be synergistically improved.

Moreover, the tire compositions, which contain an elastomer component, a silica having a nitrogen adsorption specific surface area of 170 $m^2/g$ or more, and a dicyclopentadiene-aromatic compound copolymer resin, provide improved overall performance in terms of response during high-speed running, fuel economy, wet grip performance, and abrasion resistance.

The reason for this advantageous effect is not exactly clear but may be explained as follows.

When a dicyclopentadiene-aromatic compound copolymer resin is combined with fine particle silica (a silica having a nitrogen adsorption specific surface area of 170 $m^2/g$ or more), the resin(s) provides enhanced wet grip performance as well as improving the dispersibility of the fine particle silica as described above. Thus, excellent wet grip performance can be obtained without greatly impairing abrasion resistance and fuel economy. Further, the response during high-speed running can be synergistically improved as described above. Therefore, the overall performance in terms of response during high-speed running, fuel economy, wet grip performance, and abrasion resistance can be synergistically improved.

Chemicals which may be used in the tire compositions are described below.

Any elastomer component may be used. Examples include thermoplastic elastomers and rubber components. These may be used alone or in combinations of two or more. Rubber components are preferred among these.

Herein, the term "elastomer component" refers to an elastic polymer component that serves as a base material of the composition.

The elastomer component preferably has a weight average molecular weight (Mw) of 50,000 or more, more preferably 150,000 or more, still more preferably 350,000 or more. The upper limit of the Mw is not limited and is preferably 4,000,000 or less, more preferably 3,000,000 or less.

Any thermoplastic elastomer may be used. Examples include olefin thermoplastic elastomers, styrene thermoplastic elastomers, vinyl chloride thermoplastic elastomers, urethane thermoplastic elastomers, polyamide thermoplastic elastomers, polyester thermoplastic elastomers, and fluorinated thermoplastic elastomers. These may be used alone or in combinations of two or more. Styrene thermoplastic elastomers are preferred among these.

The styrene thermoplastic elastomers may be any thermoplastic elastomer having a styrene unit, preferably a styrene block unit. Examples include styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS). These may be used alone or in combinations of two or more. Among these, SIS, SBS, SEBS, and SBBS are preferred, SIS and SEES are more preferred, and SIS is still more preferred.

Commercial thermoplastic elastomers manufactured or sold by Kaneka Corporation, Kraton Corporation, Asahi Kasei Corporation, etc. may be used.

Any rubber component may be used. Examples include diene rubbers such as isoprene-based rubbers, polybutadiene rubber (BR), styrene-butadiene rubber (SBR), styrene-isoprene-butadiene rubber (SIBR), acrylonitrile-butadiene rubber (NBR), chloroprene rubber (CR), and butyl rubber (IIR); acrylic rubbers such as butyl acrylate rubber, ethyl acrylate rubber, and octyl acrylate rubber; nitrile rubbers; isobutylene rubbers; silicone rubbers (millable type, room temperature vulcanizable type); and fluororubbers. These rubber components may be used alone or in combinations of two or more. Among these, diene rubbers are preferred, isoprene-based rubbers, BR, and SBR are more preferred, and BR and SBR are still more preferred.

The amount of the rubber components based on 100% by mass of the total elastomer component content is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effects tend to be better achieved.

The amount of the diene rubbers based on 100% by mass of the total elastomer component content is preferably 20% by mass or more, more preferably 50% by mass or more, still more preferably 70% by mass or more, particularly

preferably 80% by mass or more, most preferably 90% by mass or more, and may be 100% by mass. When the amount is within the range indicated above, the advantageous effects tend to be better achieved.

Any SBR may be used. Examples include those generally used in the tire industry, such as emulsion-polymerized SBR (E-SBR) and solution-polymerized SBR (S-SBR). These may be used alone or in combinations of two or more.

The SBR preferably has a styrene content of 10% by mass or higher, more preferably 15% by mass or higher, still more preferably 20% by mass or higher, particularly preferably 25% by mass or higher, but preferably 50% by mass or lower, more preferably 45% by mass or lower, still more preferably 40% by mass or lower, particularly preferably 30% by mass or lower. When the styrene content is within the range indicated above, the advantageous effects tend to be more suitably achieved.

The SBR may be either an unmodified SBR or a modified SBR.

The modified SBR may be any SBR having a functional group interactive with filler such as silica. For example, it may be a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxyl or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may have a substituent group. Among these, amino (preferably amino whose hydrogen atom is replaced with a C1-C6 alkyl group), alkoxy (preferably C1-C6 alkoxy), alkoxysilyl (preferably C1-C6 alkoxysilyl), and amide groups are preferred.

The SBR may be a SBR product manufactured or sold by, for example, Sumitomo Chemical Co., Ltd., JSR Corporation, Asahi Kasei Corporation, Zeon Corporation, or Versalis.

The amount of the SBR based on 100% by mass of the total elastomer component content is preferably 20% by mass or more, more preferably 40% by mass or more, but is preferably 90% by mass or less, more preferably 80% by mass or less. When the amount is within the range indicated above, the advantageous effects tend to be better achieved.

Any BR may be used. Examples include those generally used in the tire industry, such as high-cis BR, 1,2-syndiotactic polybutadiene crystal (SPB)-containing BR, and BR synthesized using rare earth catalysts (rare earth-catalyzed BR) . These may be used alone or in combinations of two or more. Among these, rare earth-catalyzed BR is preferred to more suitably achieve the advantageous effects.

Conventional rare earth-catalyzed BR may be used. Examples include those synthesized using rare earth catalysts (catalysts including lanthanide rare earth compounds, organic aluminum compounds, aluminoxanes, or halogen-containing compounds, optionally with Lewis bases). Preferred among these is Nd-catalyzed BR which is synthesized using neodymium catalysts.

The BR preferably has a cis content of 90% by mass or higher, more preferably 95% by mass or higher. The upper limit of the cis content is not limited and may be 100% by mass; yet, it is preferably 98% by mass or lower. When the cis content is within the range indicated above, the advantageous effects tend to be more suitably achieved.

The BR preferably has a vinyl content of 1.8% by mass or lower, more preferably 1.0% by mass or lower, still more preferably 0.5% by mass or lower, particularly preferably 0.3% by mass or lower. The lower limit of the vinyl content is not limited. When the vinyl content is within the range indicated above, the advantageous effects tend to be more suitably achieved.

The BR may be either an unmodified BR or a modified BR. Examples of the modified BR include those into which the above-mentioned functional groups are introduced. Preferred embodiments of the modified BR are as described for the modified SBR.

The BR may be a product available from Ube Industries, Ltd., JSR Corporation, Asahi Kasei Corporation, Zeon Corporation, or Lanxess, for example.

The amount of the BR based on 100% by mass of the total elastomer component content is preferably 10% by mass or more, more preferably 20% by mass or more, but is preferably 80% by mass or less, more preferably 60% by mass or less. When the amount is within the range indicated above, the advantageous effects tend to be more suitably achieved.

Examples of the isoprene-based rubbers include natural rubber (NR), polyisoprene rubber (IR), refined NR, modified NR, and modified IR. The NR may be one commonly used in the tire industry, such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural

rubber. Examples of the modified IR include epoxidized polyisoprene rubber, hydrogenated polyisoprene rubber, and grafted polyisoprene rubber. These may be used alone or in combinations of two or more. NR is preferred among these.

The amount of the isoprene-based rubbers based on 100% by mass of the total elastomer component content is preferably 5% by mass or more, more preferably 10% by mass or more, but is preferably 40% by mass or less, more preferably 30% by mass or less.

Herein, the weight average molecular weight (Mw) and number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and vinyl content (1,2-butadiene unit content) can be determined by infrared absorption spectrometry. The styrene content can be determined by $^1$H-NMR analysis.

The compositions (elastomer compositions, preferably rubber compositions) contain a silica having a nitrogen adsorption specific surface area of 170 $m^2$/g or more (fine particle silica). The silica may be a single material or a combination of two or more materials.

Examples of the silica include dry silica (anhydrous silicic acid) and wet silica (hydrous silicic acid). Wet silica is preferred because it has a large number of silanol groups.

The fine particle silica preferably has a nitrogen adsorption specific surface area ($N_2SA$) of 170 $m^2$/g or more, preferably 180 $m^2$/g or more, more preferably 190 $m^2$/g or more, still more preferably 200 $m^2$/g or more, particularly preferably 210 $m^2$/g or more, most preferably 215 $m^2$/g or more, still most preferably 220 $m^2$/g or more, further most preferably 225 $m^2$/g or more, particularly most preferably 230 $m^2$/g or more. The $N_2SA$ is also preferably 600 $m^2$/g or less, more preferably 300 $m^2$/g or less, still more preferably 250 $m^2$/g or less, particularly preferably 240 $m^2$/g or less. When the $N_2SA$ is within the range indicated above, the advantageous effects tend to be more suitably achieved.

Herein, the $N_2SA$ of the silica is measured by the BET method in accordance with ASTM D3037-81.

The amount of the fine particle silica per 100 parts by mass of the total elastomer component content (preferably the total rubber component content) is preferably 10 parts by mass or more, more preferably 40 parts by mass or more, still more preferably 60 parts by mass or more, particularly preferably 70 parts by mass or more, most preferably 80 parts by mass or more, still most preferably 90 parts by mass or more, but is preferably 200 parts by mass or less, more preferably 150 parts by mass or less, still more preferably 120 parts by mass or less. When the amount is within the range indicated above, the advantageous effects tend to be more suitably achieved.

The compositions may contain other types of silica different from the fine particle silica. These may be used alone or in combinations of two or more. The other types of silica different from the fine particle silica preferably have a $N_2SA$ of 50 $m^2$/g or more, more preferably 120 $m^2$/g or more, but preferably 160 $m^2$/g or less, more preferably 140 $m^2$/g or less. When the $N_2SA$ is within the range indicated above, the advantageous effects tend to be more suitably achieved.

The silica (fine particle silica, other types of silica different from the fine particle silica) may be a product available from Degussa, Rhodia, Tosoh Silica Corporation, Solvay Japan, or Tokuyama Corporation, for example.

The total silica content (parts by mass), i.e., the amount of total silica per 100 parts by mass of the total elastomer component content (preferably the total rubber component content) is preferably 10 parts by mass or more, more preferably 40 parts by mass or more, still more preferably 60 parts by mass or more, particularly preferably 70 parts by mass or more, most preferably 80 parts by mass or more, still most preferably 90 parts by mass or more, but is preferably 200 parts by mass or less, more preferably 150 parts by mass or less, still more preferably 120 parts by mass or less. When the amount is within the range indicated above, the advantageous effects tend to be more suitably achieved.

In the compositions, the silica content based on 100% by mass of the total filler (reinforcing filler) content is preferably 30% by mass or more, more preferably 50% by mass or more, still more preferably 70% by mass or more, particularly preferably 90% by mass or more, and may be 100% by mass. When the silica content is within the range indicated above, the advantageous effects tend to be more suitably achieved.

The rubber compositions containing the silica preferably further contain a silane coupling agent.

Any silane coupling agent may be used. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercially available silane coupling

agents include products of Degussa, Momentive, Shin-Etsu Silicone, Tokyo Chemical Industry Co., Ltd., AZmax. Co., and Dow Corning Toray Co., Ltd. These may be used alone or in combinations of two or more. Among these, sulfide and mercapto silane coupling agents are preferred, with mercapto silane coupling agents being more preferred, because then the advantageous effects tend to be better achieved.

Other examples of the mercapto silane coupling agents include compounds having mercapto groups and compounds having mercapto groups protected by protecting groups (for example, compounds represented by the formula (III) below).

Particularly suitable mercapto silane coupling agents include silane coupling agents containing linking units A and B represented by the formulas (I) and (II) below, respectively, and silane coupling agents represented by the formula (III) below. Among these, silane coupling agents containing linking units A and B of formulas (I) and (II) are preferred.

The silane coupling agents containing linking units A and B of formulas (I) and (II) are described below.

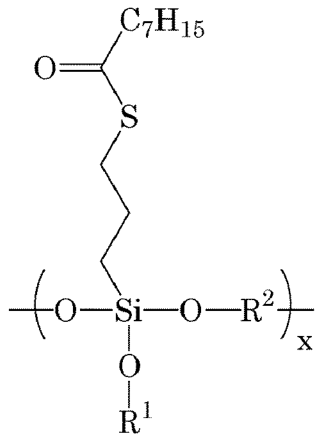
(I)

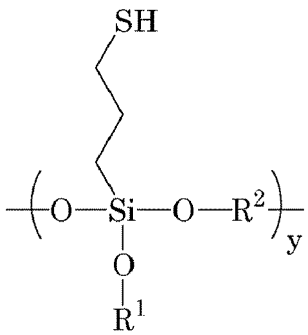
(II)

In the formulas, x represents an integer of 0 or more; y represents an integer of 1 or more; $R^1$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl or carboxyl group; $R^2$ represents a branched or unbranched C1-C30 alkylene group, a branched or unbranched C2-C30 alkenylene group, or a branched or unbranched C2-C30 alkynylene group, provided that $R^1$ and $R^2$ may together form a cyclic structure.

The linking unit A content of the silane coupling agents containing linking units A and B of formulas (I) and (II) is preferably 30 mol% or higher, more preferably 50 mol% or higher, but is preferably 99 mol% or lower, more preferably 90 mol% or lower, while the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to formula (I) representing the linking unit A or formula (II) representing the linking unit B.

With respect to $R^1$ in formulas (I) and (II), examples of the halogen atom include chlorine, bromine, and fluorine; examples of the branched or unbranched C1-C30 alkyl group include methyl and ethyl groups; examples of the branched or unbranched C2-C30 alkenyl group include vinyl and 1-propenyl groups; and examples of the branched or unbranched

C2-C30 alkynyl group include ethynyl and propynyl groups.

With respect to $R^2$ in formulas (I) and (II), examples of the branched or unbranched C1-C30 alkylene group include ethylene and propylene groups; examples of the branched or unbranched C2-C30 alkenylene group include vinylene and 1-propenylene groups; and examples of the branched or unbranched C2-C30 alkynylene group include ethynylene and propynylene groups.

In the silane coupling agents containing linking units A and B of formulas (I) and (II), the total number of repetitions (x+y) consisting of the sum of the number of repetitions (x) of the linking unit A and the number of repetitions (y) of the linking unit B is preferably in the range of 3 to 300.

Examples of the silane coupling agents containing linking units A and B of formulas (I) and (II) include NXT-Z15, NXT-Z30, NXT-Z45, and NXT-Z80 all available from Momentive. These may be used alone or in combinations of two or more.

The silane coupling agents represented by the following formula (III) are described below.

$$(C_pH_{2p+1}O)_3Si\text{-}C_qH_{2q}\text{-}S\text{-}CO\text{-}C_kH_{2k+1} \qquad \text{(III)}$$

In the formula, p represents an integer of 1 to 3, q represents an integer of 1 to 5, and k represents an integer of 5 to 12.

The symbol p represents an integer of 1 to 3, preferably of 2. When p is within the above range, the advantageous effects tend to be more suitably achieved.

The symbol q represents an integer of 1 to 5, preferably of 2 to 4, still more preferably of 3. When q is within the above range, the advantageous effects tend to be more suitably achieved.

The symbol k represents an integer of 5 to 12, preferably of 5 to 10, more preferably of 6 to 8, still more preferably of 7. When k is within the above range, the advantageous effects tend to be more suitably achieved.

Examples of the silane coupling agents of formula (III) include NXT available from Momentive. The silane coupling agents of formula (III) may be used alone or in combinations of two or more.

The amount of the silane coupling agent per 100 parts by mass of the silica is preferably 0.5 parts by mass or more, more preferably 3 parts by mass or more, still more preferably 5 parts by mass or more, but is preferably 20 parts by mass or less, more preferably 15 parts by mass or less, still more preferably 10 parts by mass or less. When the amount is within the range indicated above, the advantageous effects tend to be better achieved.

The compositions contain a dicyclopentadiene-aromatic compound copolymer resin (DCPD-aromatic compound copolymer resin) and may further contain a hydrogenated dicyclopentadiene resin (hydrogenated DCPD resin). These may be used alone or in combinations of two or more, as long as a dicyclopentadiene-aromatic compound copolymer resin is contained.

Herein, the term "dicyclopentadiene-aromatic compound copolymer resin" refers to a resin produced by copolymerization of dicyclopentadiene and an aromatic compound. It may be a hydrogenated dicyclopentadiene-aromatic compound copolymer resin.

The proportions of the aromatic compound and dicyclopentadiene may be appropriately selected. The aromatic content is preferably 2% by mass or higher, more preferably 5% by mass or higher, still more preferably 8% by mass or higher, but is preferably 30% by mass or lower, more preferably 20% by mass or lower, still more preferably 12% by mass or lower. When the aromatic content is within the range indicated above, the advantageous effects tend to be better achieved.

Herein, the aromatic content refers to the amount of the unit derived from the aromatic compound based on 100% by mass of the dicyclopentadiene-aromatic compound copolymer resin.

The dicyclopentadiene-aromatic compound copolymer resin preferably has a weight average molecular weight (Mw) of 200 or more, more preferably 300 or more, still more preferably 500 or more, but preferably 5000 or less, more preferably 3000 or less, still more preferably 2000 or less, particularly preferably 1500 or less, most preferably 1000 or less. When the Mw is within the range indicated above, the advantageous effects tend to be better achieved.

The aromatic compound may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone, and indene. These may be used alone or in combinations of two or more. Among these, phenol and styrene derivatives are preferred, with styrene derivatives being more preferred, with alkylstyrenes being still more preferred, with $\alpha$-methylstyrene being particularly preferred.

The number of carbon atoms of the alkyl or alkoxy groups in the compounds is preferably 1 to 20, more preferably 1 to 12, still more preferably 1 to 8, particularly preferably 1 to 5, most preferably 1 to 3. The number of carbon atoms of the unsaturated hydrocarbon groups in the compounds is preferably 2 to 20, more preferably 2 to 12, still more preferably 2 to 5.

The aromatic compound may have one substituent or two or more substituents on the aromatic ring. In the case of an aromatic compound having two or more substituents on the aromatic ring, the substituents may be located at any of the ortho, meta, or para positions. Moreover, in the case of a styrene derivative having a substituent on the aromatic ring, the substituent may be at the ortho, meta, or para position with respect to the vinyl group of styrene.

These aromatic compounds may be used alone or in combinations of two or more.

Specific examples of the alkylphenols include methylphenol, ethylphenol, butylphenol, t-butylphenol, octylphenol, nonylphenol, decylphenol, and dinonylphenol. They may be those substituted at any of the ortho, meta, or para positions. Among these, t-butylphenol is preferred, with p-t-butylphenol being more preferred.

Specific examples of the alkylnaphthols include compounds obtained by replacing the phenol moiety of the above-mentioned alkylphenols with naphthol.

Specific examples of the alkylstyrenes include compounds obtained by replacing the phenol moiety of the above-mentioned alkylphenols with styrene.

Specific examples of the alkoxyphenols include compounds obtained by replacing the alkyl groups of the above-mentioned alkylphenols with the corresponding alkoxy groups. Similarly, specific examples of the alkoxynaphthols include compounds obtained by replacing the alkyl groups of the alkylnaphthols with the corresponding alkoxy groups. Similarly, specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule and in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenols include isopropenylphenol and butenylphenol. The unsaturated hydrocarbon group-containing naphthols and the unsaturated hydrocarbon group-containing styrenes are similarly described.

Herein, the term "hydrogenated dicyclopentadiene resin" refers to a dicyclopentadiene resin which has been hydrogenated.

Herein, the term "dicyclopentadiene resin" refers to a resin containing dicyclopentadiene as a main monomer component of the backbone (main chain) of the resin, but excludes dicyclopentadiene-aromatic compound copolymer resins. The amount of the unit derived from dicyclopentadiene based on 100% by mass of the resin is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effects tend to be more suitably achieved.

Examples of the dicyclopentadiene resin include petroleum resins made mainly from dicyclopentadiene produced by dimerization of cyclopentadiene extracted from the C5 fraction of petroleum.

The hydrogenation may be carried out by known methods. Exemplary suitable methods include metal-catalyzed catalytic hydrogenation, and hydrazine-based hydrogenation (e.g., JP S59-161415 A). For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. These organic solvents may be used alone, or two or more of these may be used in admixture. Suitable examples of the metal catalyst include palladium, platinum, rhodium, ruthenium, and nickel. These metal catalysts may be used alone, or two or more of these may be used in admixture. The pressure to be applied is preferably, for example, 1 to 300 $kgf/cm^2$.

The hydrogenated dicyclopentadiene resin preferably has a degree of hydrogenation of double bonds (hydrogenation degree) of 20 mol% or higher, more preferably 35 mol% or higher, still more preferably 50 mol% or higher, particularly preferably 65 mol% or higher, most preferably 80 mol% or higher, further most preferably 90 mol% or higher, even most preferably 100 mol%. When the hydrogenation degree is within the range indicated above, the advantageous effects tend to be more suitably achieved.

Herein, the degree of hydrogenation (hydrogenation degree) can be calculated from the rate of decrease in the double bond signals in the $^1H$-NMR spectrum. Herein, the degree of hydrogenation (hydrogenation degree) means the degree of hydrogenation of double bonds.

The dicyclopentadiene-aromatic compound copolymer resin and the hydrogenated dicyclopentadiene resin each preferably have a softening point of 60 to 200°C. The upper limit of the softening point is more preferably 160°C or lower, still more preferably 150°C or lower, while the lower limit is more preferably 80°C or higher, still more preferably 90°C or higher. When the softening point is within the range indicated above, the advantageous effects tend to be more suitably achieved.

Herein, the softening point of the resins is determined as set forth in JIS K 6220-1:2001 using a ring and ball softening point measuring apparatus and defined as the temperature at which the ball drops down.

Exemplary commercial products of the dicyclopentadiene-aromatic compound copolymer resin or hydrogenated

dicyclopentadiene resin are available from ENEOS Corporation, Maruzen Petrochemical Co., Ltd., and Exxon Mobil.

Herein, the amount of the structural units of the resins is determined by $^1$H-NMR analysis.

The amount of the dicyclopentadiene-aromatic compound copolymer resin and optionally present hydrogenated dicyclopentadiene resin (the combined amount of the dicyclopentadiene-aromatic compound copolymer resin and the hydrogenated dicyclopentadiene resin) per 100 parts by mass of the total elastomer component content (preferably the total rubber component content) is preferably 5 parts by mass or more, more preferably 10 parts by mass or more, still more preferably 15 parts by mass or more, particularly preferably 20 parts by mass or more, most preferably 25 parts by mass or more, still most preferably 30 parts by mass or more, further most preferably 40 parts by mass or more, but is preferably 100 parts by mass or less, more preferably 80 parts by mass or less, still more preferably 70 parts by mass or less, particularly preferably 60 parts by mass or less, most preferably 50 parts by mass or less. When the combined amount is within the range indicated above, the advantageous effects tend to be better achieved.

The compositions may contain a resin other than the dicyclopentadiene-aromatic compound copolymer resin and hydrogenated dicyclopentadiene resin.

The resin other than the dicyclopentadiene-aromatic compound copolymer resin and hydrogenated dicyclopentadiene resin is not limited. Examples include solid styrene resins, alkylphenol resins, coumarone-indene resins, terpene resins, rosin resins, acrylic resins, and unhydrogenated dicyclopentadiene resins. These may be used alone or in combinations of two or more.

Exemplary commercial products of the resin other than the dicyclopentadiene-aromatic compound copolymer resin and hydrogenated dicyclopentadiene resin are available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., and Taoka Chemical Co., Ltd.

The compositions may contain a softener. In this case, the advantageous effects tend to be better achieved. Any softener may be used. Examples include oils, liquid diene polymers, and ester plasticizers. These may be used alone or in combinations of two or more. Oils are preferred among these.

Examples of the oils include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Among these, process oils are preferred, with aromatic process oils being more preferred, because then the advantageous effects can be well achieved.

Exemplary commercial products of the oils are available from Idemitsu Kosan Co., Ltd., Sankyo Yuka Kogyo K.K., ENEOS Corporation, Olisoy, H&R, Hokoku Corporation, Showa Shell Sekiyu K.K., and Fuji Kosan Co., Ltd.

Liquid diene polymers refer to diene polymers that are liquid at room temperature (25°C).

The liquid diene polymers preferably have a weight average molecular weight (Mw) of $3.0\times10^3$ or more, more preferably $4.0\times10^3$ or more, but preferably $1.0\times10^5$ or less, more preferably $1.5\times10^4$ or less. When the Mw is within the range indicated above, the advantageous effects can be more suitably achieved.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone or in combinations of two or more. Among these, liquid SBR is preferred to more suitably achieve the advantageous effects.

The liquid SBR preferably has a styrene content of 10% by mass or higher, more preferably 20% by mass or higher, still more preferably 30% by mass or higher, but preferably 55% by mass or lower, more preferably 50% by mass or lower. When the styrene content is within the range indicated above, the advantageous effects can be more suitably achieved.

Exemplary commercial products of the liquid diene polymers are available from Sartomer and Kuraray Co., Ltd.

Examples of the ester plasticizers include the above-mentioned vegetable oils; synthetic plasticizers and processed vegetable oils, such as glycerol fatty acid monoesters, glycerol fatty acid diesters, and glycerol fatty acid triesters; and phosphoric acid esters (e.g., phosphate plasticizers and mixtures thereof). These may be used alone or in combinations of two or more.

The amount of the softener (preferably oil) per 100 parts by mass of the total elastomer component content (preferably the total rubber component content) is preferably 5 parts by mass or more, more preferably 10 parts by mass or more, but is preferably 70 parts by mass or less, more preferably 50 parts by mass or less, still more preferably 30 parts by mass or less. When the amount is within the range indicated above, the advantageous effects tend to be better achieved.

The compositions may contain carbon black. In this case, the advantageous effects tend to be better achieved.

Any carbon black may be used. Examples include N134, N110, N220, N234, N219, N339, N330, N326, N351, N550, and N762. These may be used alone or in combinations of two or more.

The carbon black preferably has a nitrogen adsorption specific surface area ($N_2SA$) of 30 $m^2/g$ or more, more preferably 80 $m^2/g$ or more, still more preferably 100 $m^2/g$ or more, but preferably 200 $m^2/g$ or less, more preferably 150 $m^2/g$ or less. When the $N_2SA$ is within the range indicated above, the advantageous effects tend to be better achieved.

Herein, the $N_2SA$ of the carbon black is measured in accordance with JIS K6217-2:2001.

The carbon black may be a product available from Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon, for example.

The amount of the carbon black per 100 parts by mass of the total elastomer component content (preferably the total rubber component content) is preferably 1 part by mass or more, more preferably 3 parts by mass or more, but is preferably 50 parts by mass or less, more preferably 30 parts by mass or less, still more preferably 20 parts by mass or less. When the amount is within the range indicated above, the advantageous effects tend to be better achieved.

The compositions preferably contain sulfur as a crosslinking agent (vulcanizing agent).

Examples of the sulfur include those generally used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a product available from Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd., for example.

The amount of the sulfur per 100 parts by mass of the total elastomer component content (preferably the total rubber component content) is preferably 0.1 parts by mass or more, more preferably 0.5 parts by mass or more, but is preferably 5 parts by mass or less, more preferably 3 parts by mass or less. When the amount is within the range indicated above, the advantageous effects tend to be better achieved.

The compositions preferably contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Among these, sulfenamide and guanidine vulcanization accelerators are preferred, with combinations of sulfenamide and guanidine vulcanization accelerators being more preferred.

The vulcanization accelerator may be a product available from Kawaguchi Chemical Industry Co., Ltd., Ouchi Shinko Chemical Industrial Co., Ltd., or Rhein Chemie, for example.

The amount of the vulcanization accelerator per 100 parts by mass of the total elastomer component content (preferably the total rubber component content) is preferably 0.5 parts by mass or more, more preferably 1 part by mass or more, but is preferably 10 parts by mass or less, more preferably 5 parts by mass or less. When the amount is within the range indicated above, the advantageous effects tend to be better achieved.

The compositions may contain a wax.

Any wax may be used. Examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Among these, petroleum waxes are preferred, with paraffin waxes being more preferred.

The wax may be a product available from Ouchi Shinko Chemical Industrial Co., Ltd., Nippon Seiro Co., Ltd., or Seiko Chemical Co., Ltd., for example.

The amount of the wax per 100 parts by mass of the total elastomer component content (preferably the total rubber component content) is preferably 0.3 parts by mass or more, more preferably 0.5 parts by mass or more, but is preferably 20 parts by mass or less, more preferably 10 parts by mass or less. When the amount is within the range indicated above, the advantageous effects tend to be better achieved.

The compositions may contain an antioxidant.

Examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Among these, p-phenylenediamine or quinoline antioxidants are preferred.

The antioxidant may be a product available from Seiko Chemical Co., Ltd., Sumitomo Chemical Co., Ltd., Ouchi Shinko Chemical Industrial Co., Ltd., or Flexsys, for example.

The amount of the antioxidant per 100 parts by mass of the total elastomer component content (preferably the total rubber component content) is preferably 0.5 parts by mass or more, more preferably 1 part by mass or more, but is preferably 10 parts by mass or less, more preferably 5 parts by mass or less. When the amount is within the range indicated above, the advantageous effects tend to be better achieved.

The compositions may contain stearic acid.

The stearic acid may be a conventional one, and examples include products of NOF Corporation, Kao Corporation, FUJIFILM Wako Pure Chemical Corporation, and Chiba Fatty Acid Co., Ltd.

The amount of the stearic acid per 100 parts by mass of the total elastomer component content (preferably the total rubber component content) is preferably 0.5 parts by mass or more, more preferably 1 part by mass or more, but is preferably 10 parts by mass or less, more preferably 5 parts by mass or less. When the amount is within the range indicated above, the advantageous effects tend to be better achieved.

The compositions may contain zinc oxide.

The zinc oxide may be a conventional one, and examples include products of Mitsui Mining & Smelting Co., Ltd., Toho Zinc Co., Ltd., Hakusui Tech Co., Ltd., Seido Chemical Industry Co., Ltd., and Sakai Chemical Industry Co., Ltd.

The amount of the zinc oxide per 100 parts by mass of the total elastomer component content (preferably the total rubber component content) is preferably 0.5 parts by mass or more, more preferably 1 part by mass or more, but is preferably 10 parts by mass or less, more preferably 5 parts by mass or less. When the amount is within the range indicated above, the advantageous effects tend to be better achieved.

In addition to the above components, the compositions may contain additives generally used in the tire industry, such as organic peroxides, and fillers such as aluminum hydroxide, calcium carbonate, talc, alumina, clay, and mica. The amount of such additives is preferably 0.1 to 200 parts by mass per 100 parts by mass of the total elastomer component content (preferably the total rubber component content).

The compositions may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably from 80 to 110°C. The composition obtained after kneading vulcanizing agents and vulcanization accelerators is usually vulcanized by, for example, press vulcanization. The vulcanization temperature is usually 130 to 190°C, preferably 150 to 185°C. The vulcanization time is usually 5 to 30 minutes.

The compositions may be used in tire components (i.e., as tire rubber compositions) such as treads (cap treads), sidewalls, base treads, undertreads, clinches, bead apexes, breaker cushion rubbers, rubbers for carcass cord topping, insulations, chafers, and innerliners, as well as side reinforcement layers of run-flat tires. Among these, the compositions are suitable for use in treads (cap treads). In the case of a tread including a cap tread and a base tread, the compositions can be suitably used in the cap tread.

In the compositions, the product of (Amount (parts by mass) of silica)×(Nitrogen adsorption specific surface area ($m^2/g$) of silica) is preferably 8500 or more. The lower limit is more preferably 10000 or more, still more preferably 12000 or more, particularly preferably 15000 or more, most preferably 20000 or more, still most preferably 23000 or more. The upper limit is not limited and is preferably 35000 or less, more preferably 32500 or less, still more preferably 30000 or less, particularly preferably 27000 or less. When the product is within the range indicated above, the advantageous effects tend to be better achieved.

The "Amount of silica" refers to the amount of silica per 100 parts by mass of the total elastomer component content (preferably the total rubber component content). The nitrogen adsorption specific surface area of the silica here is not limited. In other words, the silica here encompasses not only silica having a nitrogen adsorption specific surface area of 170 $m^2/g$ or more but also silica having a nitrogen adsorption specific surface area of less than 170 $m^2/g$.

When the compositions contain multiple types of silica, for example, 50 parts by mass of silica A having a nitrogen adsorption specific surface area of 150 $m^2/g$ and 30 parts by mass of silica B having a nitrogen adsorption specific surface area of 180 $m^2/g$, the product of (Amount of silica)×(Nitrogen adsorption specific surface area of silica) is calculated as follows: $50\times150+30\times180 = 12900$.

The parameter range indicated above can be achieved by appropriately varying the amount and nitrogen adsorption specific surface area of the silica.

In the compositions, the ratio of (Combined amount (parts by mass) of dicyclopentadiene-aromatic compound copolymer resin and hydrogenated dicyclopentadiene resin)/(Amount (parts by mass) of silica) is preferably 0.125 or more. The lower limit is more preferably 0.150 or more, still more preferably 0.200 or more, particularly preferably 0.250 or more, most preferably 0.300 or more, still most preferably 0.350 or more, further most preferably 0.400 or more. The upper limit is not limited and is preferably 0.600 or less, more preferably 0.500 or less, still more preferably 0.450 or less, particularly preferably 0.420 or less. When the ratio is within the range indicated above, the advantageous effects tend to be better achieved.

The "Amount of silica" refers to the combined amount of multiple types of silica, if used, per 100 parts by mass of the total elastomer component content (preferably the total rubber component content). The nitrogen adsorption specific surface area of the silica here is not limited. In other words, the silica here encompasses not only silica having a nitrogen adsorption specific surface area of 170 $m^2/g$ or more but also silica having a nitrogen adsorption specific surface area of less than 170 $m^2/g$.

Moreover, the "Combined amount (parts by mass) of dicyclopentadiene-aromatic compound copolymer resin and hydrogenated dicyclopentadiene resin" refers to the combined amount of the resins per 100 parts by mass of the total elastomer component content (preferably the total rubber component content).

The parameter range indicated above can be achieved by appropriately varying the amounts of the resins and silica.

The compositions contain an elastomer component, a silica having a nitrogen adsorption specific surface area of 170 $m^2/g$ or more, and a dicyclopentadiene-aromatic compound copolymer resin. Preferably, the compositions contain an elastomer component, a silica having a nitrogen adsorption specific surface area of 180 $m^2/g$ or more, and a dicyclopentadiene-aromatic compound copolymer resin. More preferably, the compositions contain an elastomer component, a silica having a nitrogen adsorption specific surface area of 200 $m^2/g$ or more, and a dicyclopentadiene-aromatic compound copolymer resin. Still more preferably, the compositions contain an elastomer component, a silica having a nitrogen adsorption specific surface area of 210 $m^2/g$ or more, and a dicyclopentadiene-aromatic compound copolymer resin. Particularly preferably, the compositions contain an elastomer component, a silica having a nitrogen adsorption specific surface area of 220 $m^2/g$ or more, and a dicyclopentadiene-aromatic compound copolymer resin. Most preferably, the compositions contain an elastomer component, a silica having a nitrogen adsorption specific surface area of 230 $m^2/g$ or more, and a dicyclopentadiene-aromatic compound copolymer resin.

In the preferred embodiments, the elastomer component preferably includes BR and/or SBR, more preferably BR and SBR.

In the preferred embodiments of the compositions, the amount of SBR based on 100% by mass of the total elastomer component content is preferably at least 40% by mass but not more than 80% by mass, and the amount of BR based on 100% by mass of the total elastomer component content is preferably at least 20% by mass but not more than 60% by mass.

Moreover, in the preferred embodiments of the compositions, the amount of the dicyclopentadiene-aromatic compound copolymer resin and hydrogenated dicyclopentadiene resin (the combined amount of the dicyclopentadiene-aromatic compound copolymer resin and the hydrogenated dicyclopentadiene resin) per 100 parts by mass of the total elastomer component content (preferably the total rubber component content) is preferably 80 parts by mass or less, more preferably 70 parts by mass or less, still more preferably 60 parts by mass or less, particularly preferably 50 parts by mass or less.

Moreover, in the preferred embodiments, the compositions preferably contain the dicyclopentadiene-aromatic compound copolymer resin.

The tires of the present invention can be produced from the compositions by usual methods. Specifically, the unvulcanized compositions containing additives as needed may be extruded into the shape of a tire component (in particular a tread (cap tread)), and then formed and assembled with other tire components in a usual manner in a tire building machine to build an unvulcanized tire, which may then be heated and pressurized in a vulcanizer to produce a tire.

The tread of the tires is at least partially formed of any one of the compositions. The entire tread may be formed of any one of the compositions.

Non-limiting examples of the tires include pneumatic tires, solid tires, and airless tires, with pneumatic tires being preferred among these.

The tires are suitable for use as tires for passenger vehicles, large passenger vehicles, large SUVs, trucks and buses, or two-wheeled vehicles, or as racing tires, winter tires (studless winter tires, cold weather tires, snow tires, studded tires), all-season tires, run-flat tires, aircraft tires, or mining tires, for example. The tires are especially suitable for use as tires for passenger vehicles. The term "passenger vehicles" refers to motor vehicles used chiefly for human movement, and is the most common type of motor vehicles.

## EXAMPLES

The present invention is specifically described with reference to, but not limited to, examples.

The chemicals used in the examples and comparative examples are listed below.

SBR: Europrene SOL R C2525 (styrene content: 25% by mass) available from Versalis
BR: CB24 (BR synthesized using a Nd catalyst, cis content: 96% by mass, vinyl content: 0.7% by mass, Mw: 500,000) available from Lanxess
Thermoplastic elastomer 1: D1161 (SIS) available from Kraton Corporation

Thermoplastic elastomer 2: Tuftec P2000 (SEBS) available from Asahi Kasei Corporation
Carbon black: N220 ($N_2SA$: 114 $m^2/g$) available from Mitsubishi Chemical Corporation
Silica 1: 9100Gr ($N_2SA$: 235 $m^2/g$) available from Degussa
Silica 2: Zeosil 1165MP ($N_2SA$: 160 $m^2/g$) available from Rhodia
Silica 3: VN3 ($N_2SA$: 175 $m^2/g$) available from Degussa
Silica 4: Zeosil HRS 1200MP ($N_2SA$: 200 $m^2/g$) available from Rhodia
Silica 5: Zeosil Premium 200MP ($N_2SA$: 220 $m^2/g$) available from Rhodia
Silane coupling agent 1: NXT-Z45 (a copolymer of linking units A and B, linking unit A: 55 mol%, linking unit B: 45 mol%) available from Momentive
Silane coupling agent 2: NXT (a silane coupling agent of formula (III) in which p = 2, q = 3, and k = 7) available from Momentive
Resin 1 (dicyclopentadiene-aromatic compound copolymer resin): Oppera PR-383 (aromatic content: 9.6% by mass, softening point: 103°C, Mw: 770) available from Exxon Mobil
Resin 2 (hydrogenated dicyclopentadiene resin): T-REZ OP501 (hydrogenated DCPD resin, softening point: 140°C, dicyclopentadiene-derived unit content: 100% by mass) available from ENEOS Corporation
Resin 3 (unhydrogenated dicyclopentadiene resin): DCPD resin (product code: DO443, unhydrogenated DCPD resin, softening point: 140°C, dicyclopentadiene-derived unit content: 100% by mass) available from Tokyo Chemical Industry Co., Ltd.
TDAE oil: Vivatec 500 (TDAE, low polycyclic aromatic oil, aromatic process oil) available from H&R
Stearic acid: TSUBAKI available from NOF Corporation
Zinc oxide: zinc oxide #2 available from Mitsui Mining & Smelting Co., Ltd.
Antioxidant: NOCRAC 6C (N-(1,3-dimethylbutyl)-N'-phenyl-p-phenylenediamine, 6PPD) available from Ouchi Shinko Chemical Industrial Co., Ltd.
Wax: SUNNOC N available from Ouchi Shinko Chemical Industrial Co., Ltd.
Sulfur: powdered sulfur available from Tsurumi Chemical Industry Co., Ltd.
Vulcanization accelerator NS: NOCCELER NS (N-t-butyl-2-benzothiazole sulfenamide, TBBS) available from Ouchi Shinko Chemical Industrial Co., Ltd.
Vulcanization accelerator DPG: NOCCELER D (N,N'-diphenylguanidine) available from Ouchi Shinko Chemical Industrial Co., Ltd.

(Examples and Comparative Examples)

The chemicals other than the sulfur and vulcanization accelerators in the amounts shown in Table 1 were kneaded in a Banbury mixer at 165°C for four minutes to give a kneaded mixture. Next, the kneaded mixture was kneaded with the sulfur and vulcanization accelerators in an open roll mill at 80°C for four minutes to give an unvulcanized rubber composition.

The unvulcanized rubber composition was extruded into the shape of a tread and assembled with other tire components in a tire building machine to build an unvulcanized tire. The unvulcanized tire was press-vulcanized at 150°C for 10 minutes to prepare a test tire (tire size: 205/55R16).

The test tires prepared as above were evaluated as described below. Table 1 shows the results.

<Fuel economy>

The rolling resistance of the test tires was measured using a rolling resistance tester by running the test tires at an internal pressure of 230 kPa and a speed of 80 km/h. The rolling resistances are expressed as an index, with Comparative Example 1 set equal to 100. A higher index indicates better fuel economy. An index of 95 or higher is considered good.

<Wet grip performance>

The test tires were mounted on each wheel of a vehicle (front-engine, front-wheel-drive vehicle of 2000 cc displacement made in Japan), and the braking distance from an initial speed of 100 km/h on a wet asphalt road was determined. The results are expressed as an index. A higher index indicates better wet grip performance. The index was calculated using the following equation.

(Wet grip performance index) = (Braking distance of Comparative Example 1)/(Braking distance of each example or comparative example)×100

(Abrasion resistance)

The test tires were mounted on a vehicle, and the depth of the grooves on the tread was measured after the vehicle had run 8000 km. Then, the distance at which the groove depth was decreased by 1 mm was calculated and expressed as an index using the equation below. A higher index indicates better abrasion resistance.

(Abrasion resistance index) = (Distance at which groove depth was decreased by 1 mm in each formulation example)/(Distance at which groove depth was decreased by 1 mm in Comparative Example 1)×100

<Response during high-speed running>

A test driver drove the vehicle at 100 km/h on a dry asphalt test track with a surface temperature of 25°C and then subjectively rated the response (response of the vehicle to minute changes in steering angle) relative to Comparative Example 1, which was set equal to 100. A higher rating indicates better response during high-speed running.

[Table 1]

| | | Example 1 | Example 2* | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 |
|---|---|---|---|---|---|---|---|---|---|---|---|---|---|---|---|---|---|
| Amount (parts by mass) | SBR | 60 | 60 | 60 | 60 | 60 | 60 | 60 | 60 | 60 | 60 | 60 | 60 | 60 | 60 | 60 | 60 |
| | BR | 40 | 40 | 40 | 40 | 40 | 20 | 20 | 40 | 40 | 40 | 40 | 40 | 40 | 40 | 40 | 40 |
| | Thermoplastic elastomer 1 | | | | | | 20 | | | | | | | | | | |
| | Thermoplastic elastomer 2 | | | | | | | 20 | | | | | | | | | |
| | Carbon black | 10 | 10 | 10 | 10 | 10 | 10 | 10 | 10 | 10 | 10 | 10 | 10 | 10 | 10 | 10 | 10 |
| | Silica 1 ($N_2SA$: 235 $m^2/g$) | 100 | 100 | | | | 100 | 100 | | | | 100 | 100 | 100 | | 100 | |
| | Silica 2 ($N_2SA$: 160 $m^2/g$) | | | | | | | | | | | | | | 100 | | 100 |
| | Silica 3 ($N_2SA$: 175 $m^2/g$) | | | 100 | | | | | 45 | 50 | 70 | | | | | | |
| | Silica 4 ($N_2SA$: 200 $m^2/g$) | | | | 100 | | | | | | | | | | | | |
| | Silica 5 ($N_2SA$: 220 $m^2/g$) | | | | | 100 | | | | | | | | | | | |
| | Silane coupling agent 1 | 8 | | 8 | 8 | 8 | 8 | 8 | 3.6 | 4 | 5.6 | 8 | 8 | 8 | 8 | 8 | 8 |
| | Silane coupling agent 2 | | 8 | | | | | | | | | | | | | | |
| | Resin 1 (dicyclopentadiene-aromatic compound copolymer resin) | 40 | | 40 | 40 | 40 | 40 | 40 | 40 | 40 | 40 | 15 | 20 | 30 | 40 | | |
| | Resin 2 (hydrogenated dicyclopentadiene resin) | | 40 | | | | | | | | | | | | | | |
| | Resin 3 (unhydrogenated dicyclopentadiene resin) | | | | | | | | | | | | | | | 40 | 40 |
| | TDAE oil | 15 | 15 | 15 | 15 | 15 | 15 | 15 | 15 | 15 | 15 | 15 | 15 | 15 | 15 | 15 | 15 |
| | Stearic acid | 2 | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 | 2 |
| | Antioxidant | 1 | 1 | 1 | 1 | 1 | 1 | 1 | 1 | 1 | 1 | 1 | 1 | 1 | 1 | 1 | 1 |
| | Wax | 1 | 1 | 1 | 1 | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator NS | 2 | 2 | 2 | 2 | 2 | 2 | 2 | 2 | 2 | 2 | 2 | 2 | 2 | 2 | 2 | 2 |
| | Vulcanization accelerator DPG | 1 | 1 | 1 | 1 | 1 | 1 | 1 | 1 | 1 | 1 | 1 | 1 | 1 | 1 | 1 | 1 |
| (Amount of silica) × ($N_2SA$ of silica) | | 23500 | 23500 | 17500 | 20000 | 22000 | 23500 | 23500 | 7875 | 8750 | 12250 | 23500 | 23500 | 23500 | 16000 | 23500 | 16000 |
| (Combined amount of dicyclopentadiene-aromatic compound copolymer resin and hydrogenated dicyclopentadiene resin)/(Amount of silica) | | 0.400 | 0.400 | 0.400 | 0.400 | 0.400 | 0.400 | 0.400 | 0.889 | 0.800 | 0.571 | 0.150 | 0.200 | 0.300 | 0.400 | 0.000 | 0.000 |
| Evaluation results | Fuel economy | 95 | 100 | 100 | 100 | 95 | 85 | 90 | 135 | 130 | 120 | 110 | 105 | 100 | 100 | 90 | 100 |
| | Wet grip performance | 120 | 120 | 105 | 110 | 115 | 130 | 120 | 90 | 95 | 95 | 95 | 95 | 105 | 100 | 100 | 95 |
| | Abrasion resistance | 115 | 110 | 105 | 105 | 110 | 90 | 95 | 90 | 95 | 100 | 115 | 115 | 115 | 100 | 100 | 100 |
| | Response during high-speed running | 125 | 115 | 110 | 115 | 120 | 135 | 125 | 90 | 90 | 100 | 100 | 110 | 115 | 100 | 105 | 85 |

* Reference Example

Table 1 demonstrates that the examples containing an elastomer component, a silica having a nitrogen adsorption specific surface area of 170 $m^2/g$ or more, and a dicyclopentadiene-aromatic compound copolymer resin exhibited improved response during high-speed running.

It is also demonstrated that the overall performance in terms of response during high-speed running, fuel economy, wet grip performance, and abrasion resistance (expressed as the sum of the four indices: response during high-speed running, fuel economy, wet grip performance, and abrasion resistance) was improved in the examples containing an elastomer component, a silica having a nitrogen adsorption specific surface area of 170 $m^2/g$ or more, and a dicyclopentadiene-aromatic compound copolymer resin.

Moreover, comparisons between Example 1 and Comparative Examples 1 to 3 show that the combined use of a silica having a nitrogen adsorption specific surface area of 170 $m^2/g$ or more with a dicyclopentadiene-aromatic compound copolymer resin synergistically improved response during high-speed running and overall performance in terms of response during high-speed running, fuel economy, wet grip performance, and abrasion resistance.

The present invention aims to provide tire compositions which provide improved response during high-speed running, and tires including the tire compositions. Included is a tire composition containing: an elastomer component; a silica having a nitrogen adsorption specific surface area of 170 $m^2/g$ or more; and a dicyclopentadiene-aromatic compound copolymer resin.

## Claims

**1.** A tire, comprising a tire component comprising a tire composition, the tire composition comprising:

an elastomer component;
a silica having a nitrogen adsorption specific surface area of 170 $m^2/g$ or more; and
a dicyclopentadiene-aromatic compound copolymer resin, wherein the nitrogen adsorption specific surface area of the silica is measured by the BET method in accordance with ASTM D3037-81.

**2.** The tire according to claim 1,
wherein the tire composition further comprises a hydrogenated dicyclopentadiene resin.

**3.** The tire according to claim 1 or 2,
wherein in the tire composition, a product of (Amount of silica)×(Nitrogen adsorption specific surface area of silica) is 8500 or more.

**4.** The tire according to any one of claims 1 to 3,
wherein in the tire composition, a ratio of (Combined amount of dicyclopentadiene-aromatic compound copolymer resin and hydrogenated dicyclopentadiene resin)/(Amount of silica) is 0.125 or more.

**5.** The tire according to any one of claims 1 to 4,
wherein the tire composition comprises a mercapto silane coupling agent.

**6.** The tire according to any one of claims 1 to 5,
wherein the silica having a nitrogen adsorption specific surface area of 170 $m^2/g$ or more has a nitrogen adsorption specific surface area of 200 $m^2/g$ or more.

**7.** The tire according to any one of claims 1 to 5,
wherein the silica having a nitrogen adsorption specific surface area of 170 $m^2/g$ or more has a nitrogen adsorption specific surface area of 210 $m^2/g$ or more.

**8.** The tire according to any one of claims 1 to 5,
wherein the silica having a nitrogen adsorption specific surface area of 170 $m^2/g$ or more has a nitrogen adsorption specific surface area of 220 $m^2/g$ or more.

**9.** The tire according to any one of claims 1 to 8,
wherein the tire component is a tread.

**10.** The tire according to any one of claims 1 to 9,
wherein the tire is for passenger vehicles.

**Patentansprüche**

1. Reifen, der eine Reifenkomponente umfasst, die eine Reifenzusammensetzung umfasst, wobei die Reifenzusammensetzung umfasst:

eine Elastomerkomponente;
ein Siliciumoxid mit einer spezifischen Stickstoffadsorptionsoberfläche von 170 $m^2/g$ oder mehr; und
ein Dicyclopentadien-aromatische Verbindung-Copolymerharz, wobei die spezifische Stickstoffadsorptionsoberfläche des Siliciumoxids mit dem BET-Verfahren in Übereinstimmung mit ASTM D3037-81 gemessen ist.

2. Reifen nach Anspruch 1, wobei die Reifenzusammensetzung ferner ein hydriertes Dicyclopentadienharz umfasst.

3. Reifen nach Anspruch 1 oder 2, wobei in der Reifenzusammensetzung das Produkt aus (Menge an Siliciumoxid)×(spezifische Stickstoffadsorptionsoberfläche von Siliciumoxid) 8500 oder mehr beträgt.

4. Reifen nach einem der Ansprüche 1 bis 3, wobei in der Reifenzusammensetzung ein Verhältnis von (Kombinierte Menge an Dicyclopentadien-aromatische Verbindung-Copolymerharz und hydriertem Dicyclopentadienharz)/(Menge an Siliciumoxid) 0,125 oder mehr beträgt.

5. Reifen nach einem der Ansprüche 1 bis 4, wobei die Reifenzusammensetzung ein Mercaptosilan-Kopplungsmittel enthält.

6. Reifen nach einem der Ansprüche 1 bis 5, wobei das Siliciumoxid mit einer spezifischen Stickstoffadsorptionsoberfläche von 170 $m^2/g$ oder mehr eine spezifische Stickstoffadsorptionsoberfläche von 200 $m^2/g$ oder mehr aufweist.

7. Reifen nach einem der Ansprüche 1 bis 5, wobei das Siliciumoxid mit einer spezifischen Stickstoffadsorptionsoberfläche von 170 $m^2/g$ oder mehr eine spezifische Stickstoffadsorptionsoberfläche von 210 $m^2/g$ oder mehr aufweist.

8. Reifen nach einem der Ansprüche 1 bis 5, wobei das Siliciumoxid mit einer spezifischen Stickstoffadsorptionsoberfläche von 170 $m^2/g$ oder mehr eine spezifische Stickstoffadsorptionsoberfläche von 220 $m^2/g$ oder mehr aufweist.

9. Reifen nach einem der Ansprüche 1 bis 8, wobei die Reifenkomponente eine Lauffläche ist.

10. Reifen nach einem der Ansprüche 1 bis 9, wobei der Reifen für Personenkraftwagen bestimmt ist.

**Revendications**

1. Pneu, comprenant un composant de pneu comprenant une composition de pneu, la composition de pneu comprenant :

un composant de type élastomère ;
une silice ayant une superficie spécifique d'adsorption d'azote de 170 $m^2/g$ ou plus ; et
une résine de copolymère de dicyclopentadiène-composé aromatique, la superficie spécifique d'adsorption d'azote de la silice étant mesurée par le procédé BET conformément à la norme ASTM D3037-81.

2. Pneu selon la revendication 1, la composition de pneu comprenant en outre une résine de dicyclopentadiène hydrogénée.

3. Pneu selon la revendication 1 ou 2, dans la composition de pneu, un produit de (quantité de silice)x(superficie

spécifique d'adsorption d'azote de la silice) étant de 8 500 ou plus.

4. Pneu selon l'une quelconque des revendications 1 à 3, dans la composition de pneus, un rapport de (quantité combinée de résine de copolymère de dicyclopentadiène-composé aromatique et de résine de dicyclopentadiène hydrogénée)/(quantité de silice) étant de 0,125 ou plus.

5. Pneu selon l'une quelconque des revendications 1 à 4, la composition de pneu comprenant un agent de couplage de type mercapto silane.

6. Pneu selon l'une quelconque des revendications 1 à 5, la silice ayant une superficie spécifique d'adsorption d'azote de 170 $m^2/g$ ou plus ayant une superficie spécifique d'adsorption d'azote de 200 $m^2/g$ ou plus.

7. Pneu selon l'une quelconque des revendications 1 à 5, la silice ayant une superficie spécifique d'adsorption d'azote de 170 $m^2/g$ ou plus ayant une superficie spécifique d'adsorption d'azote de 210 $m^2/g$ ou plus.

8. Pneu selon l'une quelconque des revendications 1 à 5, la silice ayant une superficie spécifique d'adsorption d'azote de 170 $m^2/g$ ou plus ayant une superficie spécifique d'adsorption d'azote de 220 $m^2/g$ ou plus.

9. Pneu selon l'une quelconque des revendications 1 à 8, le composant de pneu étant une bande de roulement.

10. Pneu selon l'une quelconque des revendications 1 à 9, le pneu étant pour des véhicules à passager.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008101127 A
- EP 3608126 A1
- JP 2018100321 A
- EP 3434722 A1
- JP 2017095673 A
- EP 3231840 A1
- WO 2018159621 A1
- JP S59161415 A